# EUROPEAN PATENT APPLICATION

(11) **EP 4 737 817 A1**
(43) Date of publication of application: **06.05.2026**
(21) Application number: 25207579.1
(22) Date of filing: 08.10.2025
(51) Int. Cl.: F24T 10/15, B29C 45/26, B29C 33/48

(54) **CONNECTION DEVICE FOR A GEOTHERMAL PROBE AND METHOD FOR FORMING A CONNECTION DEVICE**

(30) Priority: 31.10.2024 NL 2038976
(71) Applicant: Dyka B.V., 8331 LJ Steenwijk (NL)
(72) Inventor: DE BOER, Pascal, 8331 LJ Steenwijk (NL); HESSELING, Thomas Jan, 2628 AA Delft (NL); EEK, Johannes Everardus, 2628 AA Delft (NL)
(74) Representative: Arnold & Siedsma

(57) **Abstract**

The disclosure provides a connection device for supply and return lines of heat transfer fluid of a geothermal probe. The connection device includes an inlet connection designed to connect to a supply line of heat transfer fluid, and an outlet connection intended for a return line. It features a first tubular portion connected to the inlet connection and a second tubular portion connected to the outlet connection. Additionally, a third tubular portion is connected to either the first or second tubular portion. The first tubular portion includes a tubular bending section that connects to the second tubular portion, forming a tubular U-shape, allowing fluid to flow from the inlet through the first and second tubular portions to the outlet. The first tubular portion extends longitudinally beyond a central transversal plane located centrally between the inlet connection and the outlet connection. The third tubular portion acts as a tubular appendix to the U-shape. The connection device is formed as a single piece. The disclosure also provides a method for forming the aforementioned connection device in a single step, preferably through injection moulding using a mould with a collapsible core.

## Description

### Field of the invention

The present disclosure relates to a connection device for supply and return lines of heat transfer fluid of a geothermal probe, and a geothermal probe comprising such a connection device. The disclosure also relates to a method for forming such a connection device.

### Background of the invention

A geothermal probe comprises a supply line of heat transfer fluid and a return line of heat transfer fluid arranged vertically in a borehole of 30 - 300 meters or more. The supply and return lines of heat transfer fluid are connected at the bottom by a connection device, generally in a Y-shape, allowing a flow of heat transfer fluid from the supply line to the return line. At the top, the lines are connected to pipes arranged to connect the lines to a heat pump installed in a technical room of a building.

The operating principle of a geothermal loop, of which the geothermal probe is a part, consists of capturing calories stored in the ground through the supply and return lines of heat transfer fluid which constitute vertical heat exchangers, and transferring them to the heat pump which extracts these calories from the heat transfer fluid and returns them to a heating circuit of the building. In the context of this application, the geothermal loop is the entirety of the system, including pumps, tubes and connection device. The geothermal probe is the part of the geothermal loop that is, in installation, in a bore hole in the ground, comprising supply and return tubes or lines and a connection device connecting the tubes or lines. The connection device is used to change the flow 180 degrees upwards again through the return line, with pressure loss as low as possible.

The supply and return lines of heat transfer fluid, the heat pump and the pipes connecting the latter form a closed circuit, the geothermal loop, in which the heat transfer fluid circulates.

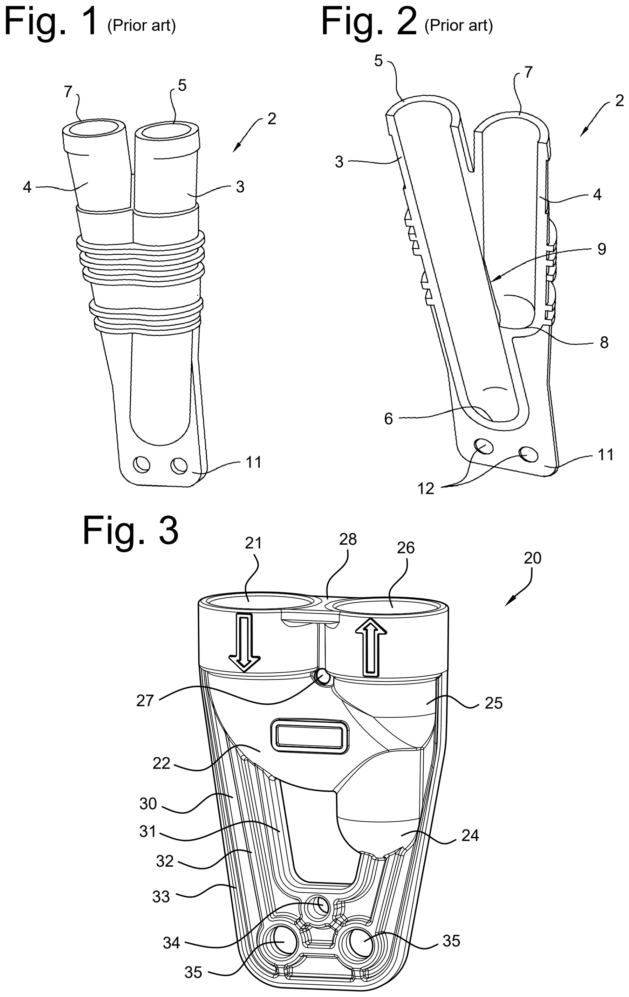

Figure 1 is a perspective view of a prior art Y-shaped connection device. Figure 2 is a perspective view in longitudinal section of the prior art connection device of figure 1.

Figures 1 and 2 show a connection device (2) for supply and return lines of heat transfer fluid of a geothermal probe. The connection device (2) comprises a substantially rectilinear first tubular portion (3) and a substantially rectilinear second tubular portion (4), the first and second tubular portions being inclined relative to each other and extending in the same plane. The first tubular portion (3) is longer than the second tubular portion (4) and extends below the point where the two portions meet, so that the connection device (2) thus has substantially the shape of the letter Y.

The first tubular portion (3) of figure 2 has a first end (5) intended to be connected to a return line of heat transfer fluid and a closed second end (6). The second tubular portion (4) has a first end (7) intended to be connected to a supply line of heat transfer fluid and a closed second end (8). The second tubular portion (4) includes an opening (9) provided in its side wall at its second end (8), said opening (9) opening into the first tubular portion (3) upstream of the closed second end (6) of the latter.

The connection device (2) of figures 1 and 2 further comprises a tab (11) arranged at the closed end (6) of the first tubular portion (3), the tab (11) extending in the extension of the first and second lines (3, 4). The tab (11) has two through openings (12) arranged to allow the attachment of a weight and/or a protection device to pull the connection device into the bore hole.

Such a prior art device can be formed as a single piece of plastic such as polyethylene (PE) using conventional injection moulding. For example, such a device can be made as a single piece in one step through injection moulding where the core is pushed in and then retracted. However, due to the somewhat abrupt way in which the first and second rectilinear tubular portions (3) and (4) are connected through opening (9) as shown in figure 2, the flow through the connection device (2) is not optimal. This results in higher demands for the pump that pumps the heat transfer fluid, leading to increased costs and higher chances of malfunction.

As a result, there is a need for a connection device with improved flow characteristics.

### Summary of the invention

The disclosure provides a connection device for connecting supply and return lines of heat transfer fluid of a geothermal probe, the connection device comprising an inlet connection intended to be connected to a supply line of heat transfer fluid; a first tubular portion connected to the inlet connection; an outlet connection intended to be connected to a return line of the heat transfer fluid; a second tubular portion connected to the outlet connection; a central transversal plane located centrally between the inlet connection and the outlet connection; a third tubular portion, connected to the first tubular portion and/or the second tubular portion;
wherein the first tubular portion comprises a tubular bending section, wherein the tubular bending section is connected to the second tubular portion so that the first tubular portion and the second tubular portion together form a tubular U-shape and fluid can flow from the inlet connection through the first tubular portion to the second tubular portion and through the outlet connection;
wherein the connection device further comprises a third tubular portion, connected to the first tubular portion and/or the second tubular portion, wherein the third tubular portion forms a tubular appendix to the tubular U-shape; preferably wherein the third tubular portion forms a single tubular appendix to the tubular U-shape, placed asymmetrically with respect to the central transversal plane;
preferably wherein the first tubular portion extends, or significantly extends, longitudinally from the inlet connection beyond the central transversal plane up to the third tubular portion. Such a device can be formed as a single piece. In other words, such a device can be formed in a single manufacturing step or a single manufacturing phase or a single production step.

With "single piece" is meant a piece that can be integrally formed in a single manufacturing step (alternatively described as a single manufacturing phase or a single production step). Such a manufacturing step can be injection moulding, but is not limited thereto. Prior art devices typically require multiple manufacturing steps and are then not defined as single-piece devices. For example, a prior art Y-shaped portion may be made with three open ends in a first manufacturing step, and the open end of the stem of the "Y" may then be welded shut with a lid in a second manufacturing step. Only with the lid attached is the device usable as a connection device for a geothermal probe. A skilled person will easily detect the welding connection between the lid and the Y and is thus able to distinguish this exemplary two-piece device from a single piece device.

In an embodiment, the first tubular portion extends, or significantly extends, longitudinally from the inlet connection beyond the central transversal plane up to the third tubular portion. In other words, the first tubular portion is divided by the central transversal plane into two parts.

In a preferred embodiment, the shortest part of these two parts, resulting from the division of the first tubular portion by the central transversal plane, is more than 5%, more than 7.5%, more than 10%, more than 12.5%, more than 15%, more than 17.5%, more than 20%, more than 22.5%, or more than 25% of the length of the first tubular portion.

In an embodiment, the first tubular portion extends, or significantly extends, longitudinally beyond a transversal plane located at the bottom of the U-shape. In other words, the first tubular portion forms a major part of the U-shape, which is asymmetrical at least in its division between the first tubular portion and second tubular portion.

In a preferred embodiment, the length of the first tubular portion is more than 55%, more than 60%, more than 65%, more than 70%, more than 75%, or more than 80% of the length of the U-shape.

In an embodiment, the tubular bending section comprised in the first tubular portion extends, or significantly extends, longitudinally from the inlet connection beyond the central transversal plane up to the third tubular portion.

In an embodiment, the tubular bending section comprised in the first tubular portion extends, or significantly extends, longitudinally beyond a transversal plane located at the bottom of the U-shape.

In an embodiment, the connection device is asymmetrical with respect to a line drawn from top to bottom through the centre of the device.

In an embodiment, the first tubular portion is formed using injection moulding using a mould with a collapsible or adaptable core for the tubular bending section.

With collapsible or adaptable core it is meant that the core does not have a fixed shape. For example, the core can be switched between a collapsed shape, where the core's segments are tightly connected to each other so that the core has a fixed form which fills an open space of the product to be made and an extended shape, in which the core's segments are flexibly connected to each other at a distance so that the core's shape is flexible to allow retraction of the core out of the product to be made.

This exemplary manufacturing step using a collapsible or adaptable core allows forming of the device as a single piece, in a single manufacturing step or phase. The method of injection moulding using pushing in and retracting of simple (straight) cores of one piece that can be pushed in and retracted in a straight line, that can be used to form the prior art device of figures 1 and 2 in a single step, is not suitable for forming the present device. The inventors have found that the device of the present disclosure has better flow properties than the prior art device of figure 1, while it can still be made as a single-piece device. The fact that the device is formed as a single piece, has advantages in terms of costs and durability over prior art devices that are formed in two or more manufacturing steps or phases. In particular, a single piece device does not require welds which can be a source of leaks. A single piece device is thus more robust than a multi-piece device that is welded together.

In an embodiment, the connection device further comprises a single, i.e. only one, third tubular portion, wherein the third tubular portion forms a single, i.e. only one, tubular appendix to the tubular U-shape, placed asymmetrically with respect to the central transversal plane. In other words, the tubular appendix is substantially on one side of, or at least skewed towards one side of, the central transversal plane. This asymmetric placement may be as described below, i.e. with the third tubular portion (axially) aligned with the first tubular portion or the second tubular portion.

In an embodiment, the tubular U-shape does not comprise any tubular appendix, apart from the third tubular portion described above.

In an embodiment, the single third tubular portion, forms a single tubular appendix to the tubular U-shape, placed only at a single side of the central transversal plane.

In an embodiment, the single third tubular portion, forms a single tubular appendix to the tubular U-shape, placed only at a the same side of the central transversal plane as the outlet connection.

In an embodiment, the third tubular portion is (axially) aligned with the first tubular portion or the second tubular portion.

With (axially) aligned it is meant that the respective centre lines of the third tubular portion are substantially parallel and substantially coincide to those of the first tubular portion or the second tubular portion. This provides an asymmetrical positioning of the tubular appendix with respect to the tubular U-shape. If the third tubular portion is aligned with the first tubular portion, the tubular appendix is substantially below the first tubular portion. If the third tubular portion is aligned with the second tubular portion, the tubular appendix is substantially below the second tubular portion.

The inventors have found that the latter arrangement is preferable over the former arrangement, as the positioning of the appendix below the outlet allows for less disturbance of the flow patterns between inlet and outlet due to settling solid materials in the appendix.

Due to the asymmetrical arrangement, the bent connecting part of the U-shape is mostly a part of the first or the second tubular portion, respectively, while simultaneously and again respectively, the second or first tubular portion is mostly straight. This arrangement has as an advantage that when injection moulding with a collapsible or adaptable core is used, only the first or second, respectively, tubular portion needs to be moulded with the collapsible or adaptable core. For the other tubular portion, a traditional push-and-retract element can be used for the injection moulding.

The connection device optimizes fluid flow through a U-shaped configuration. The design reduces flow resistance, which can enhance the efficiency of heat transfer systems by minimizing energy consumption and operational costs. The inclusion of a third tubular portion as an appendix allows for the settling of particles, which helps in maintaining the integrity and longevity of the system. The innovative use of a collapsible core in the injection moulding process enables the creation of the required internal geometry that may be unobtainable through conventional injection moulding processes. The use of a collapsible core advantageously allows the connection device to be formed as one piece, without need for additional welding of separate parts of the tubular U-shape, increasing the durability of the connection device and making it less susceptible to damage or wear and tear. Given the costs associated with replacing a damaged connection device after installation in the ground, the durability of the connection device is an important consideration.

In an embodiment, the connection device further comprises a tab portion connected to one or more of the first tubular portion, the second tubular portion, and the third tubular portion, wherein the tab portion is tapering from a location proximal to the U-shape to a location distal from the U-shape.

The tab portion aids in the installation process, by allowing weight elements to be connected thereto. The tapering design of the tab portion may facilitate easier insertion into the ground.

In an embodiment, the connection device comprises at least one reinforcing rib, preferably two reinforcing ribs, more preferably 3 reinforcing ribs.

The addition of reinforcing ribs in this embodiment enhances the structural integrity of the connection device. This reinforcement helps to withstand the mechanical stresses encountered during installation and operation, thereby extending the device's service life and reliability. In addition, the ribs serve a function during production to reduce weight and prevent deformation in the cooling process.

In an embodiment, the tab portion comprises at least one reinforced through hole configured for being connected to a pulling weight element.

This further refines the tab portion by incorporating reinforced through holes. These are designed for attachment to pulling weights, facilitating the handling and positioning of the connection device during installation. The reinforcement ensures that the connection device can withstand the forces exerted during these operations without sustaining damage.

In an embodiment, the connection device comprises, preferably consists of, thermoplastic material.

Thermoplastics are typically chosen for their durability, corrosion resistance, and ease of manufacturing, which are advantageous properties for devices used in geothermal energy systems.

In an embodiment, the connection device comprises, preferably consists of, polyethylene, PE. This further preferred specification to use polyethylene as the material of choice underscores its suitability for geothermal applications due to its excellent chemical and physical properties, including flexibility, impact resistance, and environmental stress crack resistance.

In an embodiment, the connection device is asymmetrical with respect to exchanging inlet and outlet connections. It may include visible indications on or near the inlet connection and/or outlet connection indicating an intended flow direction of heat transfer fluid. Because of the asymmetrical design, the flow direction can be optimized for a certain direction, and the connection device should be used in that manner. In order to prevent wrong usage, the intended flow direction is preferably shown through markings on the device, such as arrows. In an embodiment, the markings on the device are integrally formed with the device. This prevents accidental or deliberate premature removal of non-integrally formed markings such as adhesive stickers or the like before the device is connected to inlet and outlet lines.

In an embodiment, the collapsible core of the mould comprises a plurality of segments. The segments are interconnected and can be tightly joined together (the collapsed state for use during moulding) or loosely/flexibly connected (the extended state).

This extended state enables the removal of the collapsible core from the moulded part without damaging the intricate internal geometries necessary for optimal fluid flow.

In an embodiment, the third tubular portion comprises at least one traverse rib spanning the tubular portion.

The inclusion of traverse ribs in the third tubular portion may be used to allow any debris that may enter the appendix to settle, and to prevent the debris from subsequently being stirred up. In this manner, the traverse ribs may protect the system from potential blockages and damage. This feature can aid in maintaining the operational efficiency and longevity of the geothermal system.

In an embodiment, the connection device is (formed as) a single piece.

In an embodiment, the connection device is moulded as a mono block.

In the manufacturing process of the connection device, it may be moulded as a single, integral unit. This mono block design eliminates joints or seams that could weaken the structure or cause leaks, thereby enhancing the overall durability and reliability of the device.

The disclosure further provides a geothermal probe comprising a supply line of heat transfer fluid and a return line of heat transfer fluid, characterized in that it further comprises a connection device as described above, the inlet connection being connected to the supply line of heat transfer fluid and the outlet connection being connected to the return line of heat transfer fluid. The invention further provides the use of such a geothermal probe in a heat pump system or heat pump loop.

An advantage of using the connection device or geothermal probe of the invention in a heat pump loop or heat pump system is that it leads to lower energy costs and is more efficient. This is because the design of the connecting device maximizes fluid flow so that less energy is required to pump the fluid through the heat pump system.

The disclosure provides a method for forming a connection device,
the connection device comprising an inlet connection intended to be connected to a supply line of heat transfer fluid; a first tubular portion connected to the inlet connection; an outlet connection intended to be connected to a return line of the heat transfer fluid; a second tubular portion connected to the outlet connection; a central transversal plane located centrally between the inlet connection and the outlet connection; a third tubular portion, connected to the first tubular portion and/or the second tubular portion;
wherein the first tubular portion comprises a tubular bending section, wherein the tubular bending section is connected to the second tubular portion so that the first tubular portion and the second tubular portion together form a tubular U-shape and fluid can flow from the inlet connection through the first tubular portion to the second tubular portion and through the outlet connection;
wherein the connection device further comprises a third tubular portion, connected to the first tubular portion and/or the second tubular portion, wherein the third tubular portion forms a tubular appendix to the tubular U-shape; preferably wherein the third tubular portion forms a single tubular appendix to the tubular U-shape, placed asymmetrically with respect to the central transversal plane;
preferably wherein the first tubular portion extends, or significantly extends, longitudinally from the inlet connection beyond the central transversal plane up to the third tubular portion,
the method comprising: providing a mould; injecting moulding material into the mould; forming the connection device in a single moulding step; removing the formed connection device from the mould.

In an embodiment, the mould has a collapsible or adaptable core for the tubular bending section. The collapsible or adaptable core is collapsed during moulding and extended prior to removing the formed connection device from the mould.

This method for forming the connection device using a mould with a collapsible core may be used to achieve the complex internal geometries of the U-shaped tubular sections which may not be obtainable through conventional injection moulding. The use of a collapsible core allows for the precise formation of the bending sections without the need for seams or joints, which could potentially weaken the structure or impede fluid flow. This method enables a high-quality, durable product with optimized fluid dynamics, which reduces resistance and enhances the efficiency of the heat transfer process. Additionally, the ability to form the device in a single moulding operation advantageously reduces manufacturing complexity and costs, while also enhancing the structural integrity of the device.

In a preferred embodiment, the mould has a collapsible or adaptable core comprising a plurality of segments; wherein the collapsible core is configured to be in a collapsed state inside the mould during at least a part of the injection moulding, in which the plurality of segments are tightly connected to each other and the collapsible core forms a robust form for the single moulding; and the collapsible core is configured to be in an extended state for removal from the mould, in which the plurality of segments are flexibly connected to each other so that the plurality of segments are movable with respect to each other.

In an embodiment, the method comprises injection moulding using a thermoplastic, preferably polyethylene. Thermoplastics are known for their durability, chemical resistance, and flexibility, making them ideal for geothermal applications where the connection device may be exposed to various stresses and environmental factors. The use of polyethylene, in particular, offers excellent low-temperature impact resistance and flexibility.

In an embodiment, forming the connection device is done in a single operation without the need for subsequent welding connections. The connection device may be formed in a single operation without the need for additional welding. This not only streamlines the production process but also significantly enhances the structural integrity of the device. Welding can introduce weak points or inconsistencies in the material properties, which are eliminated by using a single-step moulding process. This advantageously results in a more robust and reliable connection device, reducing the likelihood of failures and maintenance issues in the field.

In a preferred embodiment, the third tubular portion forms a single tubular appendix to the tubular U-shape, placed asymmetrically with respect to the central transversal plane.

In an embodiment, the first tubular portion, comprised in the connection device formed in the method, extends longitudinally from the inlet connection beyond the central transversal plane up to the third tubular portion.

The described method can be used to form any of the connection device features as described above, such as the tab portion with reinforcing ribs and through holes, and the third tubular portion with traverse ribs. Incorporating these features during the moulding process can ensure that they are integrally formed with the main body of the connection device, enhancing the overall functionality and durability.

The disclosure provides a connection device obtained by the method as described above. The resulting product is a high-quality, efficiently manufactured connection device that is tailored for optimal performance in geothermal systems.

The connection device, designed for integration with geothermal systems, features a U-shaped configuration with an appendix that may serve as a settling pot. This design facilitates the connection of two pipes, ensuring reduced resistance to the flow of water, which is beneficial for efficient heat exchange with the earth.

The connection device may be engineered to be compatible with pipes having an internal diameter of 32 mm, 40 mm, or any other applicable diameter. The connection device may be engineered to be compatible with pipes from SDR17 (Standard Dimensional Rating 17) to SDR11 or to SDR9. It is to be understood that these numbers are exemplary only, and that the skilled person will be able to adapt the teachings of this disclosure to other dimensions or standards.

### Brief description of the Figures

Embodiments of the present invention will be described hereinafter, by way of example only, with reference to the accompanying drawings which are schematic in nature and therefore not necessarily drawn to scale. Furthermore, like reference signs in the drawings relate to like elements.

In the figures,
- figure 1 is a perspective view of a prior art Y-shaped connection device;
- figure 2 is a perspective view in longitudinal section of the prior art Y-shaped connection device of figure 1;
- figure 3 is a perspective view of a connection device having a U-shape according to the disclosure;
- figure 4a is a frontal view of the connection device according the disclosure;
- figure 4b is a side view of the connection device according the disclosure;
- figure 4c is a top view of the connection device according the disclosure;
- figure 5a schematically shows a blown-up view of the collapsible moulding core according the disclosure in an extended state;
- figure 5b schematically shows the collapsible moulding core according the disclosure in a collapsed state;
- figure 6a schematically shows the connection device according the disclosure;
- figure 6b schematically shows the collapsible part of the moulding core inside the connection device in the collapsed state;
- figure 6c schematically shows the collapsible part of the moulding core and an fixed part of the moulding core inside the connection device;
- figure 7a and 7b schematically show how the collapsible part of the moulding core and the fixed part of the moulding core can connect;
- figure 8a and 8b schematically show computer simulations for the flow inside the prior art Y-shaped connection device;
- figure 9a and 9b schematically show computer simulations for the flow inside the connection device according the disclosure;
- figure 10 schematically shows a method for forming a connection device according the disclosure; and
- figure 11 schematically shows a geothermal probe and its use in a heat pump system.

### Detailed description

In the context of the present disclosure, several concepts are defined as follows.

A "connection device" refers to a component designed to facilitate the connection of supply and return lines of heat transfer fluid in a geothermal probe. This device may include various configurations and features to optimize the flow of heat transfer fluid and may be constructed using materials suitable for subterranean conditions. Sometimes such a device is called a "foot of a geothermal probe" or "(geothermal) probe foot".

A "geothermal loop" or "geothermal system" is a system used to extract or dissipate heat from the ground. It typically includes supply and return lines through which a heat transfer fluid circulates. The geothermal probe, which is the part of the geothermal loop that is underground, may be for example 30-300 meters long, depending on the application, and is usually installed vertically in a borehole.

"Heat transfer fluid" is a fluid that is capable of transporting heat from one location to another. This fluid may be water, a glycol solution, or any other fluid suitable for heat transfer applications. The choice of fluid may depend on the thermal properties required and the environmental conditions of the system.

A "tubular portion" refers to a segment of the connection device that is cylindrical in shape and facilitates the flow of heat transfer fluid. This portion may be straight or include bends, and is typically part of a larger assembly that forms the connection device. Preferably the various tubular portions that make up the connection device and which are designed to form a flow path all have the same or similar diameter and cross sectional shape. The cross section may be a circle or an oval.

A "transversal plane" of a tubular portion refers to a plane perpendicular to, or essentially perpendicular to, the centre line of the tubular portion. The intersection of the tubular portion and the transversal plane is thus a cross section of the tubular portion.

The "length" of a tubular portion refers to the distance between the ends of the tubular section, measured along the centre line. For example, the length of a tubular U-shape refers to the distance between the ends of the U-shape if it were to be flattened onto a straight line.

A "tubular bending section" is a part of the tubular portion that includes a bend to allow directional change of the heat transfer fluid flow. The bend in this section may be over at least 90 degrees, at least 100 degrees, at least 110 degrees, or at least 120 degrees, facilitating various installation requirements and geometrical configurations.

A "central transversal plane located centrally between the inlet connection and the outlet connection" refers to a transversal plane (i.e. perpendicular to and intersecting the centre line of the tubular U-shape), wherein the distance of the transversal plane to the inlet connection and the outlet connection is substantially the same. In other words, the central transversal plane intersect the centre line of the U-shape half-way (i.e. in a horizontal direction, as shown in the figures) between the inlet connection and the outlet connection.

A "U-shape" in the context of the connection device refers to the form of the device where the first and second tubular portions are arranged to create a U-like shape, which can optimize fluid dynamics and reduce pressure losses.

"At the bottom of the (tubular) U-shape" refers to the lowest position of the U-shape if it positioned in a vertical plane, with the ends of the U-shape pointing upwards and positioned on an essentially horizontal line.

A "transversal plane located at the bottom of a (tubular) U-shape" refers to a transversal plane of the tubular portion having a U-shape, wherein the transversal plane intersects the centre line of the tubular portion at the bottom of the U-shape.

"Extending longitudinally beyond a plane" refers to tubular portion that extends in the longitudinal direction, i.e. in the direction of its centre line, to such a degree that it extends beyond or crosses the plane. In other words, the tubular portion has such a length that it intersects the plane, meaning that the plane divides the tubular portion into two tubular parts (which are tubular portions in their own right). The smallest part of the two parts, i.e. the part of the two parts having the shortest length, may have a length of at least 5%, at least 7.5%, at least 10%, at least 12.5%, at least 15%, at least 17.5%, at least 20%, at least 22.5%, at least 25%, at least 27.5%, at least 30%, at least 32.5%, at least 35%, at least 37.5%, at least 40%, at least 42.5%, or at least 45% of the length of the (entire) tubular portion.

"Significantly extends" preferably means that the smallest part of the two parts, in the context of the previous paragraph, has a length of at least 5%, at least 7.5%, at least 10%, at least 12.5%, at least 15%, at least 17.5%, at least 20%, at least 22.5%, at least 25%, at least 27.5%, at least 30%, at least 32.5%, at least 35%, at least 37.5%, at least 40%, at least 42.5%, or at least 45% of the length of the (entire) tubular portion.

An "appendix" in the context of a connection device is an additional tubular section that may serve as a settling pot or collection point for particles within the heat transfer fluid, thereby preventing these particles from circulating through the system and causing wear or damage e.g. on sensitive parts of the heat pump.

A "tab portion" is a feature on the connection device that may be used for attachment to other components or for aiding in the installation of the device. This portion may include holes or other attachment points and is typically located at a strategic position on the device. Unlike the tubular portions, it may not be hollow but made of a solid material.

"Inlet and outlet connections" are the points on the connection device where the heat transfer fluid enters and exits. These connections are designed to interface with the supply and return lines of the geothermal probe.

A "mould" is a form used in the manufacturing process to shape materials into a desired configuration. In the context of this disclosure, a mould is used to form the connection device using suitable materials.

"Injection moulding" is a manufacturing process for producing parts by injecting molten material into a mould. This process is used to create complex and precise shapes, such as those required for the connection device.

"Injection moulding material" refers to the substance used in the injection moulding process. This material may be a thermoplastic, such as polyethylene, which is melted and then injected into a mould to form the connection device.

A "collapsible core" or "collapsible part of the moulding core," also known as a "collapsible U-core," is a component of the mould that can be retracted or removed after the injection moulding process to release the newly formed part without causing damage to the tubular bending section or other parts of the moulded connection device. The terms "collapsible" and "adaptable" are used interchangeably herein. The collapsible core comprises segments. The collapsible core can be in a "collapsed state" in which the segments are tightly connected to each other and the core forms a robust form for moulding, or in an "extended state" in which the segments are flexibly connected to each other at a distance so that the core can be removed after moulding.

A "fixed part of the moulding core" refers to the segment of the moulding core that remains stationary during the injection moulding process and helps to define the non-collapsible sections of the connection device.

With "single piece" is meant a piece that can be integrally formed in a single manufacturing step (alternatively described as a single manufacturing phase or a single production step). Such a manufacturing step can be injection moulding, but is not limited thereto.

As will be described in more detail below in reference to the figures, the design of the connection device according the disclosure significantly reduces flow resistance compared to traditional Y-shaped designs. Computational Fluid Dynamics (CFD) analyses have demonstrated that the resistance with this new U-shaped design is more than halved, offering a competitive edge in the market. This reduction in flow resistance not only enhances the efficiency of the geothermal system but also reduces the energy required for pumping, thereby lowering operational costs and extending the lifespan of the system components.

The connection device may be manufactured as a single piece in a single-step process using for example injection moulding, which removes the need for subsequent welding connections. This process utilizes a specialized mould with a collapsible U-core (hereafter collapsible core), which achieves the internal geometries required for optimal fluid dynamics. The preferred material used for the device is polyethylene (PE), chosen for its durability and suitability for the geothermal application environment.

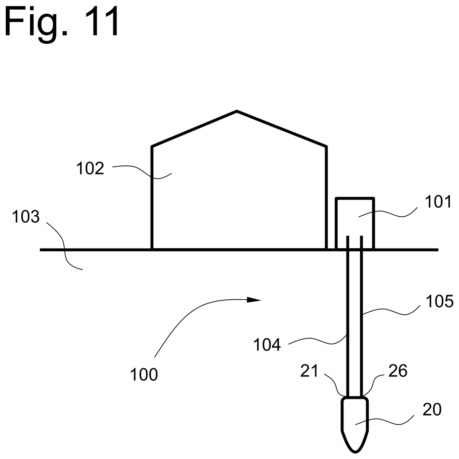

Figure 3 provides a perspective view of a connection device (20) having a U-shape according to the disclosure. The connection device (20) is designed for supply and return lines of heat transfer fluid of a geothermal probe (see Figure 11).

The connection device (20) comprises an inlet connection (21) intended to be connected to a supply line of heat transfer fluid. The inlet connection (21) is connected to a first tubular portion (22). The connection device (20) also includes an outlet connection (26) intended to be connected to a return line of the heat transfer fluid. This outlet connection (26) is connected to a second tubular portion (25).

The first tubular portion (22) and the second tubular portion (25) together form a tubular U-shape (23), allowing fluid to flow from the inlet connection through the first tubular portion to the second tubular portion and through the outlet connection.

The connection device (20) also includes a third tubular portion (24), which is connected to the first tubular portion and/or the second tubular portion. This third tubular portion (24) forms a tubular appendix to the tubular U-shape. The function of this appendix is that it allows undesirable contents of the heat transfer fluid, such as small particles, to settle in the appendix. This avoids that these particles settle in or on vulnerable parts of the geothermal system, preventing damage thereto. In the present example, the third tubular portion (24) is aligned with the second tubular portion (25) so that the tubular appendix is essentially below the outlet and, in other words, placed asymmetrically with respect to the central transversal plane.

Advantages of the asymmetric placement are that manufacturing can be easier. If for example injection moulding using a collapsible or adaptable core is used, only one such core might be needed, whereas in the symmetric position two such cores could be needed. In addition, the inventors have found through flow dynamics calculations that while any symmetric or asymmetric placement of the appendix will result in a usable product, the placement of the appendix aligned with the outlet, as shown in figure 3, is advantageous because the disturbance caused by settling solid particles in the appendix is reduced (compared to other symmetric or asymmetric arrangements of the appendix).

The first tubular portion (22) comprises a tubular bending section, which is preferably formed using injection moulding with a mould that has a collapsible core (57) for the tubular bending section. This collapsible core (57), described elsewhere, can comprise a plurality of segments (52-56).

The connection device (20) may also include a tab portion (30) connected to one or more of the first tubular portion, the second tubular portion, and the third tubular portion. This tab portion (30) preferably tapers from a location proximal to the U-shape to a location distal from the U-shape. The tapering form helps to drive the connection device into the ground, either by pushing or by pulling the connection device. The tab portion (30) may comprise a first reinforcing rib (31), a second reinforcing rib (32) and a third reinforcing rib (33) and at least one reinforced through hole (34, 35) configured for being connected to a pulling weight. The reinforcing ribs may be used to strengthen the connecting device without adding too much bulk to the shape. In addition, the ribs serve a function during production to reduce weight and prevent deformation in the cooling process. Limiting the bulk helps in making the device easier to drive into the ground. It also saves on material costs. In a particularly advantageous embodiment, one or more of the reinforcing ribs also surround one or more respective through holes (34, 35), thereby also reinforcing those through holes. These holes (34, 35) are designed to hang pulling weights from, potentially causing stress forces in the connection device.

The connection device (20) is preferably moulded as a mono block and can be made of thermoplastic material, preferably polyethylene (PE). The third tubular portion (24) may comprise at least two traverse ribs (29) spanning the tubular portion, to allow debris to settle into the appendix and prevent said debris from being stirred up again. The connection device (20) may also include an interconnector opening (27) for an interconnecting rod connecting two connection devices and a push surface (28) for an external pushing tool. With the interconnector opening, two or more connection devices (20) can be joined together and driven into the ground as one piece. The push surface (28) may be reinforced so that it is strong enough for an external element, such as a rod, pressing down onto the push surface (28) to drive the connection device(s) into the ground.

The connection device (20), designed for integration with geothermal systems, features a U-shaped configuration that may serve as a settling pot. This design facilitates the connection of two pipes, ensuring reduced resistance to the flow of water, which is beneficial for efficient heat exchange with the earth.

The connection device (20) may be engineered to be compatible with pipes having an internal diameter of 32 or 40 mm. The pipes may adhere to Standard Dimensional Ratio (SDR) 17 - SDR11 or SDR17 - SDR9. In an example, the insertion depth of the pipes into the device may be 22 mm, with an internal diameter at the inlet of 39.1 mm, tapering slightly to 38.75 mm at the bottom. The wall thickness typically varies from 4 mm at the socket weld to 3.6-3.7 mm across the body, adhering to SDR 11 standards. The overall width of the device may be maintained at 100 mm, optimizing it for the diameter of the borehole while ensuring it remains within acceptable margins. It is to be understood that these numbers are exemplary only, and that the skilled person will be able to adapt the teachings of this disclosure to other dimensions or standards.

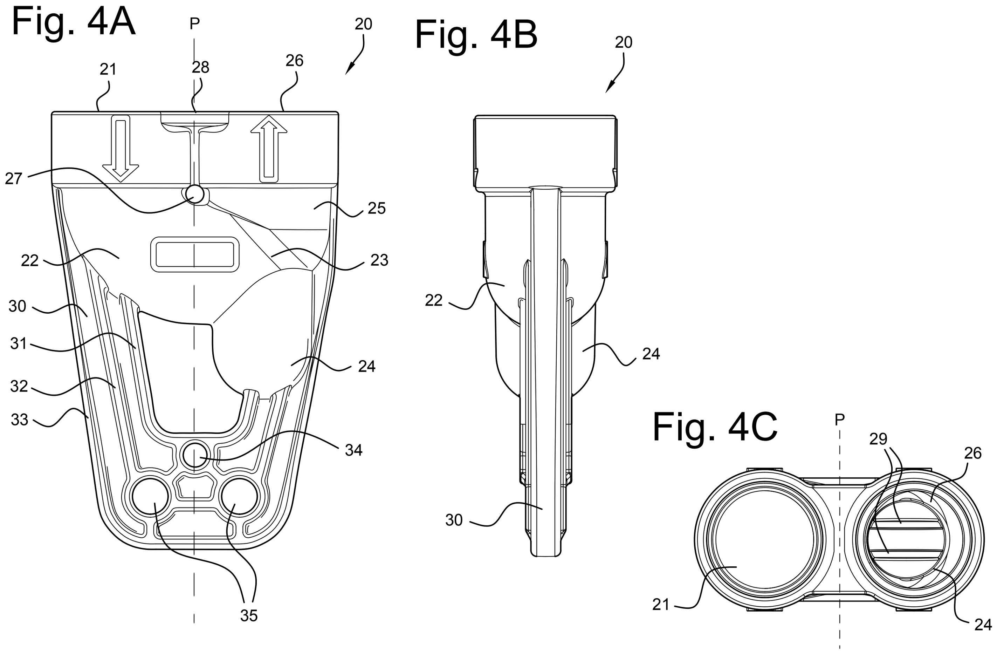

Figure 4a provides a frontal view of the connection device (20) according to the disclosure. In this view, the same elements as already described in reference to figure 3 are visible and will not all be described again. This view highlights the tubular U-shape (23) formed by the first tubular portion (22) and the second tubular portion (25), and the third tubular portion (the appendix) (24) below the second tubular portion (where the direction of the outlet defines "up" and the direction of the inlet defines "down", as also indicated on the arrows on the connecting device (20)). The tab portion (30) is also visible, showing its tapering shape from a location proximal to the U-shape to a location distal from the U-shape.

As can be seen in figure 4a, the connection device is asymmetrical with respect to a line drawn from top to bottom through the centre of the device. More specifically, the central transversal plane (P) is shown, wherein the first tubular portion (22) clearly extends longitudinally beyond said central transversal plane (P). According to the embodiment shown, it is clear that this means that the first tubular portion (22) comprises a bent, cylindrical part, which extends beyond said central transversal plane (P). It is thus further clear that this first tubular portion (22) extends longitudinally from the inlet connection (21) beyond the central transversal plane (P) up to the third tubular portion (24). Particularly, according to this exemplary embodiment the bent, cylindrical part of the first tubular portion (22) extends longitudinally beyond said central transversal plane (P), or in other words from one side of said central transversal plane (P) to the other side of said central transversal plane (P). Unlike some prior art connection devices which have a symmetrical design, the connection device of the present disclosure is asymmetrical and optimized for heat transfer fluid entering through inlet connection (21) and exiting through outlet connection (26), and not the other way around. In order to ensure correct usage, it is advantageous to provide clear markings on the device with the intended flow direction, such as the arrow markings shown on or near the inlet and outlet connections. It is preferred that these markings are integrally formed with the device so that they are always present and visible. Use of an adhesive sticker or the like is not preferred, since such a sticker may be removed deliberately or accidentally prior to connecting the connection device to a geothermal installation.

Figure 4b is a side view of the connection device (20) according to the disclosure. The third tubular portion (24), forming a tubular appendix to the tubular U-shape, is visible behind and below the first tubular portion (22) which obscures the second tubular portion (25) in this view. The central transversal plane (P) is not shown here, as it is parallel to the plane of the projection. The tab portion is also tapering in this cross-section, becoming increasingly narrow in the downward direction.

Figure 4c is a top view of the connection device (20) according to the disclosure. This view provides a clear look into the tubular U-shape (23) through the inlet connection (21) and outlet connection (26) and down to the third tubular portion (24) forming a tubular appendix to the tubular U-shape. The central transversal plane (P) located is shown. Two traverse ribs (29) span the tubular portion. These ribs help prevent debris that has settled in the appendix (24) from being stirred up again.

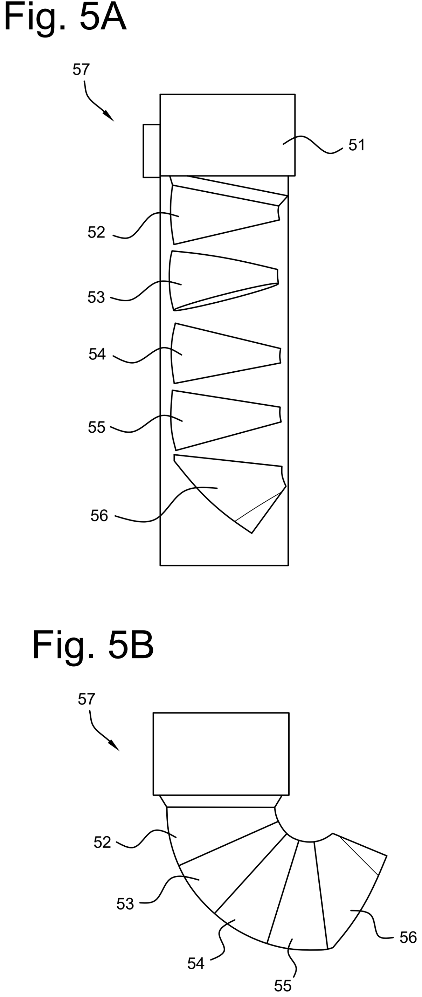

Figure 5a schematically shows a blown-up view of the collapsible moulding core according to the disclosure, in an extended state. The collapsible moulding core (57) comprises a plurality of segments, including a starting point (51), first collapsible moulding core segment (52), second collapsible moulding core segment (53), third collapsible moulding core segment (54), fourth collapsible moulding core segment (55), and an ending collapsible moulding core segment (56). Segment (52) is can slide into the starting point (51), segment (53) can slide into segment (52), segment (54) can slide into segment (53), and so on. Other arrangements are possible as well. What is important is that the collapsible core segment (53) is comprised of a number of segments and can exist in an extended state (as shown in figure 5a) and in a collapsed or reduced state (shown in figure 5b). In the extended state, the core can be removed from the mould without damaging the tubular U-shape that it has formed.

Figure 5b schematically shows the collapsible moulding core in collapsed state according to the disclosure. In this figure, the collapsible moulding core (57) is shown in its collapsed form, ready for the injection moulding process. The segments of the collapsible moulding core, from the starting point (51) to the ending collapsible moulding core segment (56), are tightly connected to form the tubular bending section of the first tubular portion (22) of the connection device (20).

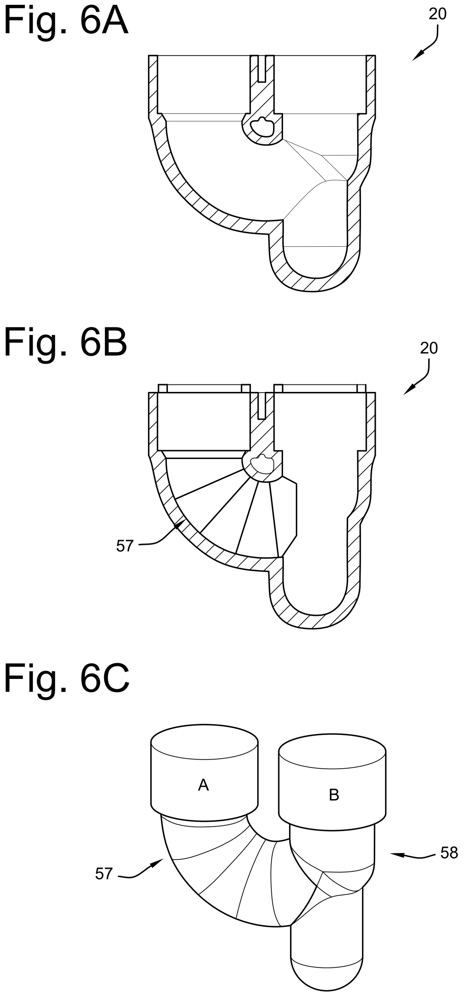

Figure 6a schematically shows the connection device (20) according to the disclosure. This figure provides a detailed view of the connection device (20), including the inlet connection (21), the first tubular portion (22), the outlet connection (26), and the second tubular portion (25). The tubular U-shape (23) formed by the first tubular portion and the second tubular portion is clearly visible. The third tubular portion (24), forming a tubular appendix to the tubular U-shape, is also shown.

Figure 6b schematically shows the collapsible part of the moulding core in the collapsed state inside the connection device (20) while the connection device is being moulded. The collapsible moulding core (57) comprises a plurality of segments, including a starting point (51), first collapsible moulding core segment (52), second collapsible moulding core segment (53), third collapsible moulding core segment (54), fourth collapsible moulding core segment (55), and an ending collapsible moulding core segment (56). A different number of segments can be used, the use of six segments is merely exemplary. In an embodiment, the collapsible core comprises two, three, four, five, six, seven, eight, nine or ten such interlinked segments.

Figure 6c schematically shows the collapsible part of the moulding core and an fixed part of the moulding core inside the connection device (20). This figure provides a view of the connection device (20) with both the collapsible moulding core (57) and an fixed part of the moulding core (58) inside. The fixed part of the moulding core (58) is used for forming the second tubular portion (25) and the third tubular portion (24).

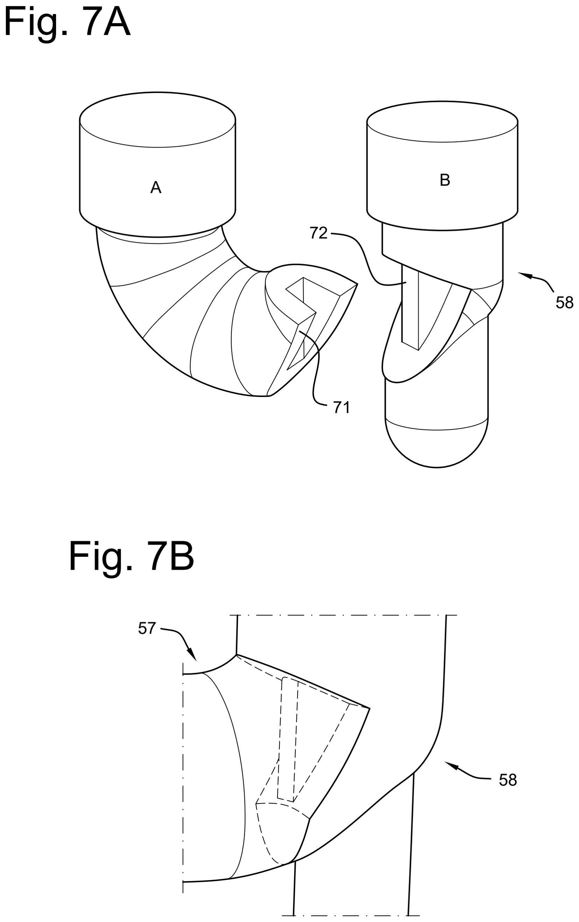

Figure 7a schematically shows how the collapsible part of the moulding core (57) and the fixed part of the moulding core (58) can connect. The figure provides a detailed view of the ending collapsible moulding core segment (56) of the collapsible moulding core (57) and the connecting protrusion (72) of the fixed part of the moulding core (58). The connecting protrusion (72) is designed to fit into the connecting gap (71) of the ending collapsible moulding core segment (56), forming a well-fitting connection so that no moulding material will flow between the two parts (57, 58) of the moulding core during injection moulding.

Figure 7b schematically shows the collapsible part of the moulding core (57) and the fixed part of the moulding core (58) connected together inside the connection device (20) (not shown) as it is being moulded. In this figure, the collapsible moulding core (57) in its collapsed form and the fixed part of the moulding core are shown inside the connection device (20). The connecting protrusion (72) of the fixed part of the moulding core is fitted into the connecting gap (71) of the ending collapsible moulding core segment (56), forming a secure connection.

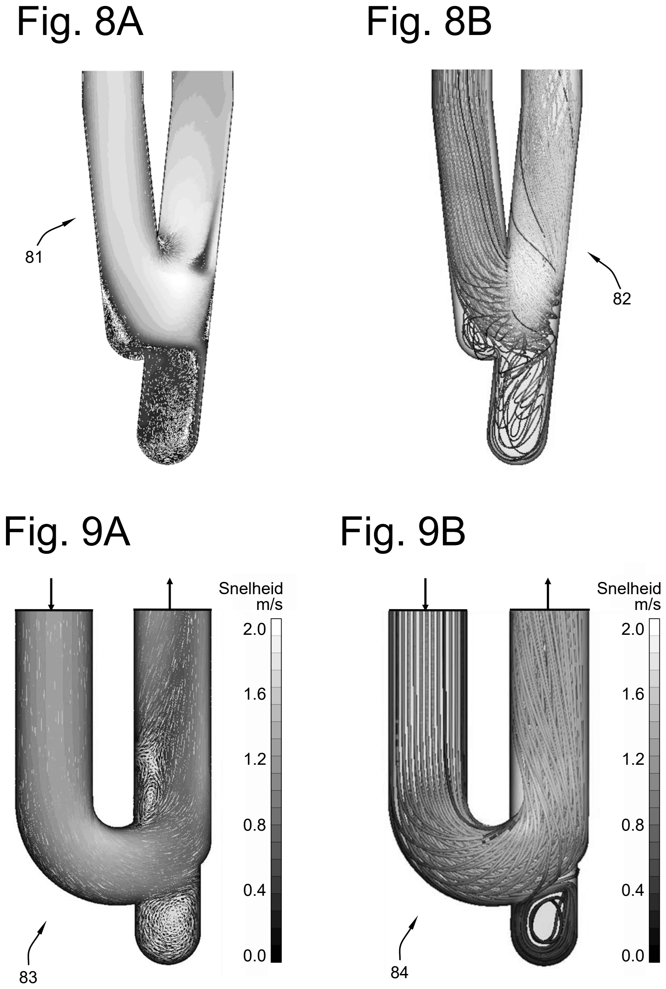

Figure 8a schematically shows computer simulations using Computational Fluid Dynamics (CFD) for the flow velocities in the prior art Y-shaped connection device (2) of figures 1 and 2. The flow velocities are represented by the computer simulated flow velocities (81).

Figure 8b schematically shows computer simulations using CFD for the flow vectors in the prior art Y-shaped connection device (2). The flow vectors are represented by the computer simulated flow vectors (82).

Figure 9a schematically shows computer simulations using CFD for the flow velocities in the connection device (20) according to the disclosure. The flow velocities are represented by the computer simulated flow velocities (83).

Figure 9b schematically shows computer simulations using CFD for the flow vectors in the connection device (20) according to the disclosure. The flow vectors are represented by the computer simulated flow vectors (84).

All calculations were performed using connection devices (2, 20) adapted to be connected to fluid supply and return lines having 40 mm internal diameters.

The computer simulations indicate that the calculated fluid pressure reduction in the design according to the disclosure is halved compared to the prior art Y-shaped design. This is advantageous because a lower pressure drop means less energy is required to pump the fluid through the connection device (20). This can lead to significant energy savings, especially in applications where the fluid needs to be pumped over long distances or at high flow rates. Additionally, a lower pressure drop can also reduce the wear and tear on the pump and other components of the system, potentially extending their lifespan and reducing maintenance costs.

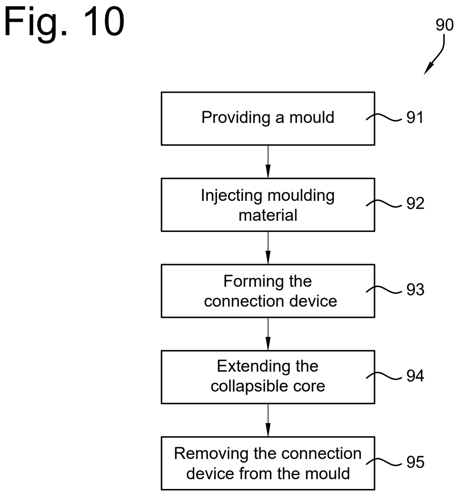

Figure 10 schematically shows a method for forming a connection device (20) according to the disclosure. The method comprises several steps:

A first step (91) is providing a mould with a collapsible core (57) for the tubular bending section. The collapsible part of the mould is collapsed. In a second step (92), moulding material is injected into the mould.

Forming the connection device (20), wherein the collapsible core (57) is collapsed during moulding and extended prior to removing the formed connection device (20) from the mould, is represented by reference number (93).

Extending the collapsible core (57) of the mould is represented by reference number (94) and removing the connection device 20 from the mould is represented by reference number (95).

This method allows for the formation of the connection device (20) in a single operation without the need for subsequent welding connections, which can save time and reduce manufacturing costs. The use of a collapsible core (57) for the tubular bending section allows for the creation of complex shapes that would be difficult or impossible to achieve with traditional moulding techniques.

Extensive simulations, including CFD and Moldflow analyses, were conducted to optimize the design for minimal flow resistance and maximum structural integrity. The simulations confirmed that the new design provides smoother flow lines and significantly reduces pressure drop across the device. Strength and stiffness simulations were also performed to ensure that the device can withstand the physical stresses encountered during installation and operation.

The final design has been tested to handle weights up to 250 kg, with potential for up to 300 kg, ensuring robust performance under various operational conditions.

The described connection device thus represents an advancement in the field of geothermal energy systems, offering enhanced performance, overcoming manufacturing complexity, and improving durability of geothermal systems.

Figure 11 schematically shows a geothermal probe according to the invention (100). In this figure, a heat pump (101) is connected to a supply line of a heat transfer fluid (104), extending into the ground (103) adjacent and connected to a building (102). Once the heat transfer fluid has reached it lowest vertical point, it flows into a connection device of the invention (20) via an inlet (21). The heat transfer fluid then exits the connection device via an outlet (26) into a return line (105) to the heat pump. This setup allows capturing calories stored in the ground (103) through the supply (104) and return lines (105) of heat transfer fluid which constitute vertical heat exchangers, and transferring them to the heat pump (101) which extracts these calories from the heat transfer fluid and returns them to a heating circuit of the building (102).

In the foregoing description of the figures, the invention has been described with reference to specific embodiments thereof. It will, however, be evident that various modifications and changes may be made thereto without departing from the scope of the invention as summarized in the attached claims.

It is understood that, based on the above examples, modifications may be made to adapt a particular situation or material to the teachings of the invention without departing from the essential scope thereof. Therefore, it is intended that the invention not be limited to the particular embodiments disclosed, but that the invention will include all embodiments falling within the scope of the appended claims.

In particular, combinations of specific features of various aspects of the invention may be made. An aspect of the invention may be further advantageously enhanced by adding a feature that was described in relation to another aspect of the invention.

It is to be understood that the invention is limited by the annexed claims and its technical equivalents only. In this document and in its claims, the verb "to comprise" and its conjugations are used in their non-limiting sense to mean that items following the word are included, without excluding items not specifically mentioned. In addition, reference to an element by the indefinite article "a" or "an" does not exclude the possibility that more than one of the element is present, unless the context clearly requires that there be one and only one of the elements. The indefinite article "a" or "an" thus usually means "at least one".

The following reference numbers are used in the figures:
2: Y-shaped connection device
3: first tubular portion of the Y-shaped connection device
4: second tubular portion of the Y-shaped connection device
5: first end of the first tubular portion of the Y-shaped connection device
6: closed second end of the first tubular portion of the Y-shaped connection device
7: first end of the second tubular portion of the Y-shaped connection device
8: second end of the second tubular portion of the Y-shaped connection device
9: opening in the side wall of the second tubular portion of the Y-shaped connection device
11: tab of the Y-shaped connection device
12: through opening in the tab of the Y-shaped connection device
20: connection device
21: inlet connection
22: first tubular portion
23: tubular U-shape
24: third tubular portion
25: second tubular portion
26: outlet connection
27: interconnector opening for interconnecting rod connecting two connection devices
28: push surface for external pushing tool
29: traverse rib of the third tubular portion
30: tab portion
31: first reinforcing rib of the tab portion
32: second reinforcing rib of the tab portion
33: third reinforcing rib of the tab portion
34: first reinforced through hole
35: second reinforced through hole
51: starting point of the collapsible moulding core
52: first collapsible moulding core segment
53: second collapsible moulding core segment
54: third collapsible moulding core segment
55: fourth collapsible moulding core segment
56: ending collapsible moulding core segment
57: collapsible moulding core in extended form
58: moulding core for second tubular form and third tubular form
71: connecting gap of the ending collapsible moulding core segment
72: connecting protrusion of the moulding core for the second tubular form and third
tubular form
81: computer simulated flow velocities in the Y-shaped connection device
82: computer simulated flow vectors in the Y-shaped connection device
83: computer simulated flow velocities in the connection device according the
invention
84: computer simulated flow vectors in the connection device according the invention
90: method for forming a connection device through injection moulding
91: providing a mould
92: injecting moulding material in the mould
93: forming the connection device in the mould
94: collapsing the collapsible core of the mould
95: removing the connection device from the mould
100: geothermal probe
101: heat pump
102: building
103: ground
104: supply line of heat transfer fluid
105: return line of heat transfer fluid
P: central transversal plane

## Claims

1. Connection device (20) for connecting supply and return lines of heat transfer fluid of a geothermal probe, the connection device comprising:
- an inlet connection (21) intended to be connected to a supply line of heat transfer fluid;
- a first tubular portion (22) connected to the inlet connection (21);
- an outlet connection (26) intended to be connected to a return line of the heat transfer fluid;
- a second tubular portion (25) connected to the outlet connection;
- a central transversal plane (P) located centrally between the inlet connection (21) and the outlet connection (26)
wherein the first tubular portion comprises a tubular bending section, wherein the tubular bending section is connected to the second tubular portion (25) so that the first tubular portion (22) and the second tubular portion (25) together form a tubular U-shape and fluid can flow from the inlet connection (21) through the first tubular portion (22) to the second tubular portion (25) and through the outlet connection (26);
wherein the connection device further comprises a single third tubular portion (24), connected to the first tubular portion (22) and/or the second tubular portion (25), wherein the third tubular portion (24) forms a single tubular appendix to the tubular U-shape (23), placed asymmetrically with respect to the central transversal plane (P); and
wherein the first tubular portion (22) extends longitudinally from the inlet connection (21) beyond the central transversal plane (P) up to the third tubular portion (24).

2. Connection device (20) according to claim 1, wherein:
- the single third tubular portion (24), forms a single tubular appendix to the tubular U-shape (23), placed only at a single side of the central transversal plane (P); or
- the single third tubular portion (24), forms a single tubular appendix to the tubular U-shape (23), placed only at a the same side of the central transversal plane (P) as the outlet connection (26).

3. Connection device (20) according to claim 1 or 2, wherein the first tubular portion (22) is formed using injection moulding, wherein the injection moulding comprises using a mould with a core (57).

4. Connection device (20) according to claim 3, wherein the core (57) is a collapsible core (57) comprising a plurality of segments (52-56), wherein the collapsable core (57) is configured to:
- be in a collapsed state inside the mould during at least a part of the injection moulding, in which the plurality of segments (52-56) are tightly connected to each other and the collapsible core (57) forms a robust form for the single moulding; and
- be in an extended state for removal from the mould, in which the plurality of segments (52-56) are flexibly connected to each other so that the plurality of segments (52-56) are movable with respect to each other.

5. Connection device (20) according to any one of the preceding claims, wherein the third tubular portion (24) is aligned with the first tubular portion (22) or the second tubular portion (25), preferably with the second tubular portion (25).

6. Connection device (20) according to any one of the previous claims, further comprising a tab portion (30) connected to one or more of the first tubular portion (22), the second tubular portion (25), and the third tubular portion (24), wherein the tab portion (30) is tapering from a location proximal to the U-shape to a location distal from the U-shape,
preferably wherein the tab portion (30) comprises at least one reinforcing rib (31, 32, 33), more preferably two reinforcing ribs, most preferably 3 reinforcing ribs.

7. Connection device (20) according to claim 6, wherein the tab portion (30) comprises at least one reinforced through hole (34, 35) configured for being connected to a pulling weight.

8. Connection device (20) according to any one of the preceding claims, wherein the connection device comprises, preferably consists of, thermoplastic material, such as polyethylene, PE.

9. Connection device (20) according to any one of the preceding claims, wherein the connection device is asymmetrical and includes visible indications on or near the inlet connection (21) and/or outlet connection (26) indicating an intended flow direction of heat transfer fluid.

10. Connection device (20) according to any one of the preceding claims, wherein the third tubular portion (24) comprises at least one traverse rib (29) spanning the tubular portion.

11. Connection device (20) according to any one of the preceding claims, wherein the connection device is a single piece, preferably wherein the connection device is moulded as a mono block.

12. Geothermal probe (100) comprising a supply line of heat transfer fluid (104) and a return line of heat transfer fluid (105), **characterized in that** it further comprises a connection device (20) according to any one of claims 1-11, the inlet connection (21) being connected to the supply line of heat transfer fluid and the outlet connection (26) being connected to the return line of heat transfer fluid.

13. Method for forming a connection device (20) according to any of claims 1-11, the method comprising:
- providing a mould with a collapsible core (57) for the tubular bending section, wherein the collapsible core (57) comprises a plurality of segments (52-56);
- injecting moulding material into the mould;
- forming the connection device (20) in a single moulding step,
- removing the formed connection device (20) from the mould,
wherein the collapsible core (57) is in a collapsed state inside the mould during the single moulding step, in which the plurality of segments (52-56) are tightly connected to each other;
wherein the collapsible core (57) is in an extended state during removal from the mould of the formed connection device (20), in which the plurality of segments (52-56) are flexibly connected to each other so that plurality of segments (52-56) are movable with respect to each other.

14. Method for forming a connection device (20) according to claims 12 or 13, comprising injection moulding using a thermoplastic, preferably polyethylene.

15. Method for forming a connection device (20) according to any one of claims 12-14, wherein forming the connection device (20) is done in a single operation without the need for subsequent welding connections.
